# EUROPÄISCHE PATENTSCHRIFT

(11) **EP 3 183 117 B1**
(45) Veröffentlichungstag und Bekanntmachung des Hinweises auf die Patenterteilung: **13.03.2019**
(21) Anmeldenummer: 15756876.7
(22) Anmeldetag: 20.08.2015
(51) Int. Cl.: B32B 37/00, B32B 37/12, B32B 38/18, B32B 7/12, B32B 27/32, B32B 27/08, B32B 29/04, B32B 38/00, B32B 15/08, B32B 15/18, B32B 15/20, B32B 21/08, B32B 27/10, B32B 27/30, B32B 27/34, B32B 27/36, B32B 37/10

(54) **VERFAHREN UND VORRICHTUNG ZUM VERKLEBEN VON ZWEI FOLIENFÖRMIGEN SUBSTRATEN**
METHOD AND DEVICE FOR ADHESIVELY BONDING TWO SHEET-LIKE SUBSTRATES
PROCÉDÉ ET APPAREIL DE COLLAGE DE DEUX SUBSTRATS PELLICULAIRES

(30) Priorität: 21.08.2014 DE 102014216633
(43) Veröffentlichungstag der Anmeldung: 28.06.2017
(73) Patentinhaber: Henkel AG & Co. KGaA, 40589 Düsseldorf (DE)
(72) Erfinder: KINZELMANN, Hans-Georg, 50259 Pulheim (DE); GIERLINGS, Michael, 40723 Hilden (DE)
(86) Internationale Anmeldenummer: PCT/EP2015/069100
(87) Internationale Veröffentlichungsnummer: WO 2016/026918

(56) Entgegenhaltungen:
- WO-A1-2007/017007
- WO-A1-2014/019891
- WO-A2-2008/144169
- NL-C2- 1 030 609
- DATABASE CA [Online] CHEMICAL ABSTRACTS SERVICE, COLUMBUS, OHIO, US; 27. Februar 2014 (2014-02-27), Zhangjiagang Changtai Automotive Trims Material Co., Ltd., Peop. Rep. China: "Method for producing polyurethane multilayer composite plate for automotive ceiling", XP002750903, Database accession no. 160:279901 -& CN 103 538 329 A (ZHANGJIAGANG CHANGTAI AUTOMOTIVE TRIM MATERIAL CO LTD) 29. Januar 2014 (2014-01-29)

## Beschreibung

Die Erfindung betrifft ein Verfahren zum Verkleben von zwei Substraten, wobei ein Substrat einen Thermoplast enthält und die verbindende Klebstoffschicht dünn ausgebildet ist, sowie eine Vorrichtung zum Verkleben dieser zwei Substrate.

Im Stand der Technik sind vielfältige Verfahren zum Verkleben von Substraten bekannt, wobei zum Verbinden der Substrate verschiedenste Klebstoffe verwendet werden.

Beispielsweise beschreibt die WO 2014/019891 A1 ein Verfahren zum Verkleben von zwei Substraten, wobei auf einem ersten Substrat ein Klebstoff mit einem Schichtgewicht unter 2 g/m² aufgetragen wird, dieses Substrat mit dem zweiten folienförmigen Substrat aus einem thermoplastischen Kunststoff zusammengeführt wird, wobei die Oberfläche des zweiten Substrats durch Erwärmen in einen erweichten Zustand überführt wird und die Substrate vor, während und/oder unmittelbar nach dem Erwärmen durch Druck miteinander verklebt werden.

Ferner beschreibt die WO 2008/144169 A2 ein Verfahren zum Herstellen eines Faserisolationsflors mit gegenüberliegenden Fasern, umfassend: A. Zuführen eines Faserflors mit einer ersten Dicke auf einen sich bewegenden Förderband; B. Aufbringen von Wärme auf die Fasermatte und auf einen Wellfilm; C. Verbinden der Deckfolie mit mindestens der Oberseite der Fasermatte, während eine Druckbelastung auf die Matte und die Deckfolie aufgebracht wird, die ausreicht, um ein Kompressionsverhältnis der Fasermatte von der ersten Dicke zu einer Enddicke im Bereich von 25 zu realisieren : 1 bis 2: 1; D. Fördern des Deckschichtfilms und der Faserlage zu einem Kühlbereich; E. Abkühlen des Deckschichtfilms und des Faserflors; und F. Schneiden des gegenüberliegenden Faserflors auf eine voreingestellte Länge.

Um Substrate optimal miteinander zu verbinden, muss der eingesetzte Klebstoff die Oberflächen der Substrate vollständig bedecken. Ist die verwendete Klebstoffmenge zu gering, werden die Substrate nicht vollflächig miteinander verbunden und das erhaltene Produkt neigt zur Delaminierung. Darüber hinaus können beim Einsatz einer zu geringen Klebstoffmenge Luftblasen während des Verfahrens eingeschlossen werden, die bei so erzeugten, transparenten Verbundkörpern optisch wahrnehmbar und unerwünscht sind und die ebenfalls die Qualität der Verklebung mindern. Um die Menge des eingesetzten Klebstoffs und die damit verbundenen Kosten zu reduzieren und zusätzlich eine vollflächige Verklebung zu gewährleisten, sind glatte Oberflächen der Substrate, insbesondere bei großflächigen Substraten wie Folien, vorteilhaft. Daher wird bei zu verklebenden Substraten, die Thermoplasten umfassen, die Oberfläche beispielsweise durch Wärmeeinwirkung vor der Verklebung geglättet. Substrate mit rauen Oberflächen schließen im Gegensatz dazu einen größeren Hohlraum ein und benötigen beim Verkleben eine größere Klebstoffmenge. Beim Erwärmungsvorgang kann sich jedoch das erwärmte Substrat verformen, insbesondere dehnen, so dass der erhaltene Verbundkörper verdreht und verzerrt ist und somit nicht mehr die gewünschte Beschaffenheit aufweist.

Die Aufgabe der vorliegenden Erfindung bestand somit darin, ein Verfahren beziehungsweise eine Vorrichtung zur Herstellung eines Verbundkörpers zur Verfügung zu stellen, der ein folienförmiges Substrat, das mindestens einen Thermoplast enthält, und ein weiteres Substrat umfasst, wobei die Substrate vollflächig mit einer geringen Klebstoffmenge miteinander verklebt sind und der Verbundkörper darüber hinaus nicht verformt ist.

Überraschenderweise wurde nun gefunden, dass ein derart hergestellter Verbundkörper nicht verformt ist, wenn beim Herstellungsverfahren ein folienförmiges Substrat, das Bestandteil des Verbundkörpers wird und mindestens einen Thermoplast umfasst, während des Erwärmens mittels mindestens eines Förderbandes gestützt wird.

Daher richtet sich in einem ersten Aspekt die vorliegende Erfindung auf ein Verfahren zum Verkleben von zwei Substraten umfassend:
(i) Transportieren eines ersten, folienförmigen Substrats enthaltend mindestens einen Thermoplast mittels mindestens eines stützenden Förderbandes durch eine Erwärmungszone, in der das Substrat so erwärmt wird, dass die Oberfläche des ersten Substrats in einen erweichten Zustand überführt wird;
(ii) Zusammenführen des ersten Substrats mit einem zweiten Substrat, wobei das zweite Substrat mit einem Klebstoff mit einem Schichtgewicht von 0,01 bis 4 g/m², vorzugsweise 0,01 bis 1,5 g/m², bevorzugt 0,01 bis 1 g/m², besonders bevorzugt 0,01 bis 0,7 g/m² beschichtet ist, während und/oder unmittelbar nach, vorzugsweise unmittelbar nach, dem Erwärmen; und
(iii) Verkleben der beiden Substrate durch Druck.

Schließlich richtet sich die vorliegende Erfindung in einem weiteren Aspekt auf eine Vorrichtung zum Verkleben von einem ersten und einem zweiten Substrat umfassend
(i) mindestens ein stützendes Förderband um ein erstes folienförmiges Substrat, enthaltend mindestens einen Thermoplast, zu transportieren,
(ii) eine Erwärmungsvorrichtung um das mittels des mindestens einen Förderbandes transportierte erste Substrat an der Oberfläche zu erweichen, und
(iii) eine Walzengruppe um das erweichte erste Substrat mit dem zweiten Substrat zusammenführen und zu verkleben; wobei
(iv) die Vorrichtung zum Verkleben ein weiteres stützendes Förderband umfasst, das in Prozessrichtung hinter der Walzengruppe angeordnet ist.

Diese und weitere Aspekte, Merkmale und Vorteile der Erfindung werden für den Fachmann aus dem Studium der folgenden detaillierten Beschreibung und Ansprüche ersichtlich. Dabei kann jedes Merkmal aus einem Aspekt der Erfindung in jedem anderen Aspekt der Erfindung eingesetzt werden. Ferner ist es selbstverständlich, dass die hierin enthaltenen Beispiele die Erfindung beschreiben und veranschaulichen sollen, diese aber nicht einschränken und insbesondere die Erfindung nicht auf diese Beispiele beschränkt ist. Alle Prozentangaben sind, sofern nicht anders angegeben, Gewichts-%. Numerische Bereiche, die in dem Format "von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

"Mindestens ein", wie hierin verwendet, bezieht sich auf 1 oder mehr, beispielsweise 1, 2, 3, 4, 5, 6, 7, 8, 9 oder mehr. Im Zusammenhang mit Bestandteilen der hierin beschriebenen Zusammensetzungen bezieht sich diese Angabe nicht auf die absolute Menge an Molekülen sondern auf die Art des Bestandteils. "Mindestens ein Thermoplast" bedeutet daher beispielsweise ein oder mehrere verschiedene Thermoplaste, d.h. eine oder mehrere verschiedene Arten von Thermoplasten. Zusammen mit Mengenangaben beziehen sich die Mengenangaben auf die Gesamtmenge der entsprechend bezeichneten Art von Bestandteil, wie bereits oben definiert.

Wie bereits erwähnt wurde, enthält das erste folienförmige Substrat mindestens einen Thermoplast und wird im Folgenden auch lediglich als "erstes Substrat" bezeichnet. Erfindungsgemäß sind alle im Stand der Technik bekannten für den Zweck geeigneten Thermoplaste verwendbar. Thermoplasten wie hierin beschrieben sind Kunststoffe, die sich in einem bestimmten Temperaturbereich verformen lassen. Als erstes Substrat sind beispielsweise flexible Folienmaterialien geeignet, einschließlich Polyolefine, wie Polyethylen (LDPE, LLDPE, metallocen katalysiertes PE, HDPE) oder Polypropylen (PP, CPP, OPP), Polyvinylchlorid (PVC), Ethylencopolymere, wie Ethylenvinylacetat (EVA), Ethylenacrylatcopolymere (EMA), Ethylenmethylmethacrylatcopolymer (EMMA), Ethylenacrylsäurecopolymer (EAA), Polyester, Polylactide (PLA), Polyamide und lonomere. In einer bevorzugten Ausführungsform ist das erste Substrat Polyethylen, Polypropylen oder ein Gemisch davon. Die Folienmaterialen können auch modifiziert sein, beispielsweise durch Modifikation der Kunststoffoberfläche mit funktionellen Gruppen. Ferner kann das erste Substrat auch weitere Komponenten enthalten, beispielsweise Pigmente, Farbstoffe und/oder Weichmacher. Das erste Substrat ist in einer bevorzugten Ausführungsform ein Kunststoff mit einer Erweichungstemperatur (gemessen mit DSC) unter 200 °C, vorzugsweise unter 170 °C. Die Erweichungstemperatur, wie hierin verwendet, ist die mittels DSC bei einer Aufheizrate von 10 K/min bestimmbare Schmelzpeaktemperatur (gemäß der Norm DIN EN ISO 11357-3:2011). Als erstes Substrat sind ebenfalls Verbundsubstrate einsetzbar. Voraussetzung hierfür ist, dass die zu verklebende Oberfläche thermoplastisch beschichtet ist und sich die Oberfläche mittels Wärmeeinwirkung in einen erweichten Zustand überführen lässt, um bei der Verklebung eine möglichst glatte Oberfläche aufzuweisen. Erweichter Zustand, wie hierhin verwendet, ist der Zustand, bei dem eine Formveränderung der Oberfläche des ersten Substrats mit geringem Kraftaufwand möglich ist. Die glatte Oberfläche kann dabei durch die Erwärmung in Schritt (i) erzeugt werden und/oder durch den Druck während des Verklebens in Schritt (iii), da die Oberfläche des ersten Substrats in einem erweichten Zustand vorliegt und daher verformbar ist. Im Allgemeinen weist die Oberfläche des ersten Substrates während und kurz nach dem Erwärmen eine geringere Steifigkeit auf und ist leichter verformbar als vor dem Erwärmen. Gemäß der Erfindung kann es sich beim ersten Substrat um gefärbte, farblose oder transparente Folien handeln. Flexible Folien wie hierin verwendet sind herkömmliche dünne, bahnenförmige Substrate, die beispielsweise als Verpackungsfolie, Dekorfolie, Band oder in ähnlichen Formen bekannt sind. Als zweites Substrat können erfindungsgemäß eine Vielzahl von verschiedenen Materialien eingesetzt werden. Dieses weist in einer bevorzugten Ausführungsform der vorliegenden Erfindung eine Oberfläche auf, die bei erhöhter Temperatur beziehungsweise unter den Verfahrensbedingungen nicht verformbar sind. Es kann sich um feste Materialien handeln, beispielsweise um Holzwerkstoffe, Metalle, wie Aluminium, Eisen oder Zink, Metalllegierungen, wie Bronze, duroplastische oder thermoplastische Kunststoffe, wie Polyethylen (PE), Polypropylen (PP), Polyvinylchlorid (PVC), Polystyrol (PS), Acrylnitril-Butadien-Styrol-Copolymeren (ABS), Polyester oder Polyamide, organische Polymere, wie Cellophan, Papier, Karton und andere Werkstoffe. Es können aber auch flexible, folienförmige Materialien, beispielsweise auch die, die oben im Zusammenhang mit dem ersten Substrat offenbart wurden, als zweites Substrat eingesetzt werden. In einer bevorzugten Ausführungsform der Erfindung ist sowohl das erste Substrat als auch das zweite Substrat folienförmig. Ferner können Mehrschichtsubstrate als zweites Substrat eingesetzt werden. So kann die Oberfläche beschichtet, beispielsweise mit Metall-, Oxid- oder Kunststoffbeschichtungen, bedruckt, eingefärbt oder chemisch modifiziert sein. Diese Materialien können auch im ersten Substrat nach der Erfindung enthalten sein. Optional können die Oberflächen des ersten und des zweiten Substrates vorbehandelt sein. Beispielsweise können die Kunststoffoberflächen gereinigt sein und sie können gegebenenfalls vor dem Verkleben noch einer physikalischen, chemischen oder elektrochemischen Vorbehandlung unterworfen werden.

Gemäß der Erfindung wird in Schritt (i) die zu verklebenden Oberfläche des ersten Substrats erwärmt. Dies kann vor oder während des Verklebens erfolgen. Dabei kann das gesamte erste Substrat oder auch nur die Oberfläche des ersten Substrats erwärmt werden. Bevorzugt wird die Erwärmung so durchgeführt, dass nur die Oberfläche des Substrats erwärmt wird. Erfindungsgemäß werden dabei weder die mechanischen Eigenschaften noch die chemischen Zusammensetzung des ersten Substrates nachteilig beeinflusst. Das Erwärmen erfolgt durch eine Erwärmungsvorrichtung und kann direkt an der zu verklebenden Oberfläche erfolgen. Es ist auch möglich, berührungslose Erwärmungsverfahren einzusetzen. Verfahren zum Erwärmen von Substraten sowie Erwärmungsvorrichtungen sind im Stand der Technik bekannt und es können alle geeigneten Verfahren und Techniken angewendet werden. Das Erwärmen der Oberfläche kann beispielsweise durch Kontakt mit erwärmten Gegenständen geschehen, beispielsweise kann eine heiße Walze über das Substrat geführt werden, oder durch Überleiten von heißen Gasen. So kann die Oberfläche auch beflämmt werden oder es kann eine Plasmabehandlung durchgeführt werden. In einer weiteren Ausführungsform wird elektromagnetische Strahlung, im Radiofrequenzbereich, im Bereich der Mikrowellenstrahlung oder im Ultraschallbereich, vorzugsweise IR-Strahlung oder NIR-Strahlung eingesetzt. In einer bevorzugten Ausführungsform wird die Oberfläche des ersten Substrates mittels IR-Strahlung mit einer Wellenlänge von 1 bis 10 µm, bevorzugt 1,5 bis 2 µm, erwärmt. Es ist zweckmäßig, dass das Substrat schnell und nur der Bereich der zu verklebenden Oberfläche erwärmt wird. So kann sichergestellt werden, dass die mechanischen Eigenschaften sowie die chemischen Zusammensetzung des ersten Substrates kaum oder nicht beeinträchtigt werden. In einer bevorzugten Ausführungsform erfolgt die Verklebung unmittelbar nach dem Erwärmen des ersten Substrats. Bei der Erwärmung durch Ultraschall ist es zweckmäßig, dass zunächst die beiden Substrate zusammengeführt werden und anschließend durch das Foliensubstrat eine Erwärmung der verklebten Oberfläche durchgeführt wird. Die zu verklebende Oberfläche des ersten Substrats wird auf eine Temperatur erwärmt, die ungefähr der Erweichungstemperatur des thermoplastischen Substrates entspricht. In einer bevorzugten Ausführungsform der Erfindung wird die Oberfläche des ersten Substrats auf eine Erweichungstemperatur ± 40 °C, vorzugsweise die Erweichungstemperatur ± 20 °C (Erweichungstemperatur gemessen mit DSC) des Polymers erwärmt. Bei diesen Temperaturen wird die Oberfläche des Substrates weich und gegebenenfalls unter Druck verformbar oder fließfähig. Die Oberfläche kann auch ohne Druck lediglich durch die Wärmeeinwirkung geglättet werden. Es ist im Stand der Technik bekannt, dass in Abhängigkeit des Polymers diese eine enge Erweichungstemperatur, beispielsweise einen Schmelzpunkt, oder einen Erweichungsbereich aufweisen kann. Um zu gewährleisten, dass lediglich nur die zu verklebende Oberfläche des ersten Substrats mittels Erwärmung in einen erwärmten Zustand überführt wird, kann die nicht zu verklebende Oberfläche (Rückseite) gekühlt werden. Durch die Kühlung der Rückseite des Substrats kann die Steifigkeit erhalten oder gegebenenfalls sogar erhöht werden. Dies wirkt sich positiv auf die Unterdrückung der Verdrehung und Verzerrung des erhaltenen Verbundkörper aus. In einer bevorzugten Ausführungsform erfolgt die Kühlung durch eine Kühleinheit. Kühleinheiten sind im Stand der Technik bekannt und es können alle bekannten, für diesen Zweck geeigneten Kühleinheiten verwendet werden. Dabei kann die Kühlung mittels einer Flüssigkeitskühlung, beispielsweise einer Wasserkühlung, einer Luftkühlung oder einer Ölkühlung erfolgen. Hierbei weisen die Kühlmittel eine Temperatur auf, die vorzugsweise um mindestens 5 °C geringer, bevorzugt um mindestens 10 °C geringer, noch bevorzugter mindestens 15 °C geringer ist als die Umgebungstemperatur. Die Kühleinheit wie hierin beschrieben kann unterschiedliche Formen aufweisen. Vorzugsweise ist sie plattenförmig. Des Weiteren steht in einer bevorzugten Ausführungsform die Kühleinheit in unmittelbarem Kontakt mit dem mindestens einen stützenden Förderband.

Die raue Oberfläche des ersten Substrats kann durch das Erwärmen und Verkleben unter Druck mit dem klebstoffbehafteten, zweiten Substrat geglättet werden. Dadurch werden eine besonders geringe Schichtdicke des aufgetragenen Klebstoffes zwischen den Substraten und ferner eine vollflächige Verklebung ermöglicht. In Abhängigkeit der Oberflächenbeschaffenheit des ersten Substrats, der Erweichungstemperatur des ersten Substrats und der erzeugten Oberflächentemperatur des ersten Substrats kann die Oberfläche des ersten Substrates bereits durch die Erwärmung ohne Druck geglättet werden.

Nach der Erfindung wird in Schritt (i) das erste Substrat mittels mindestens eines stützenden Förderbandes durch eine Erwärmungszone transportiert. Die Deformation, insbesondere das Dehnen, des ersten Substrates wird während des Verfahrens unter anderem durch die Erwärmung in Kombination mit der Spannung, die auf dem ersten Substrat liegt, verursacht. Dadurch kann sich das erste Substrat vorzugsweise in Richtung der Prozesslinie deformieren, insbesondere dehnen, was dann ein Verdrehen und Verziehen des erhaltenen Verbundkörpers zur Folge hat. Das mindestens eine stützende Förderband gemäß der Erfindung stützt und stabilisiert das erste Substrat und verhindert Deformierungen, insbesondere Dehnung, in alle drei Raumrichtungen. Die Deformierung kann auch durch die Gravitation hervorgerufen werden. Das mindestens eine stützende Förderband ist in Prozessrichtung vor dem Ort des Verklebens, also vor der Walzengruppe, und im Wirkungsbereich der Erwärmungsvorrichtung angeordnet und vorzugsweise an die Verklebungsgeschwindigkeit in Schritt (iii) des Verfahrens anpassbar. Ferner kann das mindestens eine Förderband wie hierin beschrieben über zwei Walzen geführt werden. Das mindestens eine Förderband gemäß der Erfindung ist elastisch und strapazierfähig, insbesondere reißfest und abriebbeständig. Darüber hinaus muss das mindestens eine stützende Förderband eine Temperaturbeständigkeit von mehr als 150 °C, vorzugsweise mehr als 200 °C, noch bevorzugter mehr als 250 °C, am bevorzugtesten mehr als 300 °C aufweisen. Geeignete Materialien für das mindestens eine Förderband sind beispielsweise elastische Gewebe und Gewirke aus Natur- und/oder Kunststofffasern. Grundsätzlich sind alle dem Fachmann bekannten und für den gesamten Zweck geeigneten Materialien verwendbar, beispielsweise Polymere wie Polyamid, insbesondere aromatische Polyamide (Aramide) wie Poly(p-phenylenterephthalamide) (PPTA), Kevlar® oder Nomex®, Polyester, insbesondere thermoplastische Copolyester, Polyisopren, Polystyrolbutadien, Polyisobutylenisopren, Polyacrylnitrilbutadien, Polyvinylchlorid (PVC), Naturkautschuk, Silikonkautschuk, thermoplastisches Polyurethan, oder Gemische davon.

Optional können weitere Materialien hinzugefügt werden, wie beispielsweise anorganische Füllstoffe, um die Temperaturbeständigkeit des Bandes zu erhöhen. Beispielsweise können Förderbänder aus Kautschuk, Ruß als Füllstoff enthalten. Ebenfalls als Füllstoffe geeignet sind Glas- und Carbonfasern.

Generell kann das mindestens eine Förderband Textil- oder Stahlseileinlagen beinhalten, die Zugkräfte übertragen. Das mindestens eine Förderband kann in verschiedenen Ausführungsformen auch ein Runddrahtgliedergurt sein.

In verschiedenen Ausführungsformen der Erfindung kann das mindestens eine Förderband Öffnungen aufweisen, beispielsweise perforiert sein. Diese können die Kühlung der nicht zu verklebenden Seite erleichtern oder das Anlegen eines Unterdrucks, der die Stützwirkung verbessert, ermöglichen.

Gemäß der Erfindung ist das mindestens eine stützende Förderband insbesondere wärmeleitfähig. Das ist insbesondere bei der Kühlung der nicht zu verklebenden Seite vorteilhaft. Sowohl der Aufbau als auch die Funktionsweise solcher Förderbänder sind im Stand der Technik bekannt.

In einer bevorzugten Ausführungsform der vorliegenden Erfindung wird das mindestens eine stützende Förderband während des Verfahrens mit der 1,0- bis 1,1-fachen, vorzugsweise der 1,01-bis 1,10-fachen, Geschwindigkeit des zweiten Substrates geführt. Durch diese leicht erhöhte Geschwindigkeit des mindestens einen Förderbandes wird die Deformation, insbesondere die Dehnung in Richtung der Prozesslinie, unterdrückt, so dass sich das erste Substrat nicht oder kaum dehnt und sich daher das erhaltene Produkt nicht verdreht und verzieht.

In Schritt (ii) des erfindungsgemäßen Verfahrens wird das erste Substrat mit einem zweiten Substrat zusammengeführt. Das zweite Substrat ist mit einem Klebstoff beschichtet. Dieser Klebstoff kann in einer bevorzugten Ausführungsform der Erfindung in einem zusätzlichen Verfahrensschritt auf das zweite Substrat aufgetragen werden, vorzugsweise parallel zu Schritt (i). Falls erforderlich, kann das zweite Substrat bevor der Klebstoff aufgetragen wird ebenfalls den Schritt (i) des Verfahrens durchlaufen. Der Klebstoff kann durch im Stand der Technik etablierte Verfahren aufgetragen werden, beispielsweise durch Sprühen, Benetzen, Rakeln, Walzen, Drucken oder andere bekannte Verfahren. Erfindungsgemäß wird der Klebstoff insbesondere mit einem Schichtgewicht von 0,01 bis 4 g/m² aufgetragen, vorzugsweise von 0,01 bis 1,5 g/m², bevorzugt von 0,01 bis 1 g/m² und noch bevorzugter von 0,01 bis 0,7 g/m². Der Klebstoff kann den Erfordernissen der Verklebung angepasst werden. Werden wässrige Klebstoffe eingesetzt, ist es zweckmäßig, das Wasser von der Oberfläche abzuführen. Werden lösemittelhaltige Klebstoffe ausgewählt, ist die Oberfläche gegen das verwendete Lösemittel beständig. Werden Heißschmelzklebstoffe ausgewählt, ist das Substrat so gewählt, dass die Oberfläche durch den möglichen Wärmeeintrag nicht beeinträchtigt wird. Reaktive Klebstoffe können gegebenenfalls eine verbesserte Haftung zum Substrat ergeben. Werden strahlenvernetzende Klebstoffe eingesetzt, kann bevorzugt vor dem Zusammenfügen der Substrate eine Bestrahlung der Klebstoffschicht erfolgen, um eine Vernetzung zu erhalten. Der Klebstoff wird vorzugsweise ausgewählt aus der Gruppe bestehend aus thermoplastischen Klebstoffen, vernetzbaren Klebstoffen und Gemischen davon in lösemittelhaltiger, wässriger oder lösemittelfreier Form. Sowohl das Verfahren als auch die Vorrichtung gemäß der Erfindung kann in Anpassung an den Klebstoff falls nötig weitere entsprechende Verfahrensschritte umfassen, wie Trocknungsschritte, Erwärmungsschritte oder andere unterstützende Verfahrensschritte, beziehungsweise Einheiten, durch die diese Verfahrensschritte umsetzbar sind. Für das erfindungsgemäße Verfahren kann ein geeigneter Klebstoff aus auftragbaren Klebstoffen verwendet werden, die flüssig sein können. Es kann sich dabei um wässrige Dispersionen, lösemittelhaltige, nicht reaktive oder reaktive Klebstoffe oder auch lösemittelfreie, flüssige oder feste, schmelzbare Klebstoffe handeln. Darüber hinaus kann der Klebstoff ein 1-Komponentensysteme oder ein 2-Komponentensystem sein. Beispiele für geeignete Klebstoffe sind solche auf Basis von thermoplastischen Polymeren, wie Polyurethanen, Ethylenvinylacetat, Polyacrylaten, lösemittelhaltigen Klebstoffen, wie Acrylatklebstoffen, 1K-oder 2K- Polyurethanklebstoffen, Silan-vernetzenden Klebstoffen, reaktiven Schmelzklebstoffen, wie 1K-PU-Klebstoffen, oder lösemittelfreien 1K- oder 2K-PU-Klebstoffen, Silan-Systemen oder strahlenvernetzbaren Klebstoffen. Erfindungsgemäß ist es zweckmäßig, dass der Klebstoff eine niedrige Viskosität aufweist. Die Viskosität eines geeigneten Klebstoffs beim Auftragen beträgt beispielsweise bis 10.000 mPas, bevorzugt bis 5.000 mPas (gemessen mit einem Brookfield-Viskosimeter; ISO 2555). Die Messtemperatur wurde der Auftragstemperatur angepasst. Für bei Raumtemperatur flüssige Klebstoffe wird die Viskosität beispielsweise bei 20 bis 40 °C bestimmt, bei Schmelzklebstoffen kann die Messtemperatur bei 100 bis 150 °C liegen. Bei höher viskosen Klebstoffen kann beispielsweise auch bei 40 bis 100 °C gemessen werden. Wässrige oder lösemittelhaltige Klebstoffe besitzen häufig eine niedrige Viskosität bis 500 mPas, Schmelzklebstoffe häufig eine Viskosität über 1.000 mPas.

In Schritt (iii) des Verfahrens gemäß der Erfindung werden das erste und das zweite Substrat durch Druck verklebt. Durch die Zusammenführung mit der erwärmten Oberfläche des ersten Substrats kann auch die dünne Klebstoffschicht erwärmt werden. Das kann zu einem schnelleren Haftungsaufbau und zu einer schnelleren Vernetzung führen. Durch die Verklebung unter Druck wird trotz der geringen Klebstoffmenge eine großflächige Verklebung erzielt. Es können alle dem Fachmann bekannten Vorrichtungen zum Zusammenführen und Verkleben angewendet werden, wie beispielsweise Stempel, Rollen, Walzen und/oder Platten, insbesondere durch Pressen oder Walzen. In Abhängigkeit der Substrate und der Vorbehandlung, insbesondere der Oberflächentemperatur des ersten Substrats, kann der Druck des Eigengewichts des ersten beziehungsweise des zweiten Substrats genügen, um die Verklebung durchzuführen. Der Druck auf die Substrate kann beispielsweise zwischen 0,2 bis 15 bar betragen. Beim Verkleben von zwei Foliensubstraten sind Kaschiervorrichtungen, die dafür verwendet werden können, im Stand der Technik etabliert. Erfindungsgemäß wird für das Verkleben in Schritt (iii) des Verfahrens eine Walzengruppe verwendet. Eine Walzengruppe wie hierin verwendet umfasst zwei Walzen, wobei diese in gegensätzliche Richtung rotieren und auf die Werkstoffe, in diesem Fall auf die zwei Substrate, die sich dazwischen befinden, Druck ausüben und diese zusammen pressen.

In einer weiteren bevorzugten Ausführungsform liegt der erhaltene Verbundstoff, nachdem dieser in Schritt (iii) verklebt wurde, auf mindestens einem weiteren, stützenden Förderband auf. Das mindestens eine Förderband ist Teil der Vorrichtung nach der Erfindung und führt den hergestellten Verbundstoff von der Walzengruppe weg. Dieses mindestens eine Förderband trägt zur Unterdrückung des Verziehens und Verdrehens des erhaltenen Verbundkörpers bei, insbesondere beim Abkühlen nach den Schritten (i) bis (iii) des erfindungsgemäßen Verfahrens.

Bei dem Verfahren gemäß der Erfindung kann es sich sowohl um einen Chargenprozess als auch um ein kontinuierliches Verfahren handeln, vorzugsweise um ein kontinuierliches Verfahren.

Ferner soll an dieser Stelle darauf hingewiesen werden, dass nach dem erfindungsgemäßen Verfahren Verklebungen in einem weiten Anwendungsgebiet durchgeführt werden können. Werden feste Substrate mit folienförmigen Substraten verklebt, wird auf das gegebenenfalls vorbehandelte feste Substrat der Klebstoff aufgetragen. Auf die so beschichtete Oberfläche wird das erste Substrat mit einer Oberfläche aus thermoplastischen Polymeren aufgebracht. Durch die Erwärmung der Oberfläche des ersten Substrats, das mindestens einen Thermoplast enthält, wird dieses an der Oberfläche aufgeweicht. Unter Anwendung von Druck beim Verkleben kann sichergestellt werden, dass eine besonders glatte Oberfläche des zu verklebenden thermoplastischen Substrates erhalten wird. Luftblasen wurden während des erfindungsgemäßen Verfahrens nicht eingeschlossen. Das erhaltene Produkt neigte nicht zur Delaminierung. Eine andere Ausführungsform verwendet ein flexibles, zweites Substrat, auf dem ein Klebstoff in dünner Schicht aufgetragen wird. Auf diese Oberfläche wird ebenfalls unter Druck ein Foliensubstrat aufgebracht, das eine Schicht aus thermoplastischen Polymeren an der Oberfläche aufweist. Durch Erwärmen und Verkleben mit dem ersten Substrat wird ebenfalls sichergestellt, dass eine besonders glatte Oberfläche des ersten Substrats erhalten wird.

Der Verbundkörper, der nach dem hierin beschriebenem Verfahren erhältlich ist wird im Folgenden beschrieben. Dieser Verbundkörper umfasst ein erstes Substrat, das einen Thermoplast enthält, ein zweites Substrat sowie eine dazwischen befindliche Klebstoffschicht, wobei diese Klebstoffschicht eine Stärke von 0,01 bis 4 µm aufweist. Die Schichtstärke kann durch das Auftragsgewicht des Klebstoffes auf die Fläche eingestellt werden, beispielsweise von 0,01 bis 4 g/m². Dabei kann das zweite Substrat ein starres oder festes Substrat sein, beispielsweise ein Formkörper aus unterschiedlichen Materialien mit einer geringen Oberflächenrauigkeit. Als weitere Ausführungsform kann das zweite Substrat aus einem flexiblen Substrat bestehen. Dabei sind Material und Eigenschaften dieses flexiblen Substrats in weiten Grenzen variierbar. Es kann sich aber auch um das gleiche Material wie das erste Substrat handeln. Das zweite Substrat kann gegebenenfalls auch bearbeitet oder bedruckt sein. Durch den Auftrag einer dünnen Klebstoffschicht wird die Oberfläche des zweiten Substrats nicht beeinflusst/verändert. Ein möglicher Gehalt an Wasser oder an organischen Lösemitteln des aufgetragenen Klebstoffes ist so ausgewählt, dass die Eigenschaften der Oberfläche des ersten Substrates im Wesentlichen nicht beeinträchtigt werden. Die erfindungsgemäßen Verbundsubstrate weisen eine hohe Festigkeit der verklebten Einzelsubstrate auf. Durch die geringe Schichtdicke der Klebstoffschicht wird eine hohe Kohäsion des Klebstoffes sichergestellt. Weiterhin ist durch die geringe Schichtdicke eine verbesserte Flexibilität der Klebstoffschicht gegeben. Deswegen können erfindungsgemäße Verbundsubstrate eine hohe Stabilität gegen elastische Verformungen aufweisen. Ein weiterer Vorteil des erfindungsgemäßen Verfahrens und der damit hergestellten Verbundkörper ist in der geringen optischen Veränderung der Oberflächen zu sehen. Durch eine dünne Klebstoffschicht kann diese optisch kaum wahrnehmbar und farblos sein und die optischen Eigenschaften des Verbundgegenstandes werden verbessert oder bleiben erhalten. Ein weiterer Vorteil des erfindungsgemäßen Verfahrens liegt in den geringeren Belastungen beim Herstellungsprozess. Durch den geringen Gehalt an Lösemitteln und Wasser sowie die geringe Erwärmungstemperatur werden die Eigenschaften der unterschiedlichen Substrate nicht beeinträchtigt. Beispielsweise sind geringe Wassermengen für Papiersubstrate vorteilhaft. Geringe Lösemittelmengen sind unabhängig von der Arbeitshygiene auch für Substrate zweckmäßig, die gegebenenfalls gegenüber Lösemitteln empfindlich sind. Durch die geringe Schichtdicke wird auch die Oberfläche des ersten Substrates beim Auftragen eines Schmelz-Klebstoffes thermisch nur wenig beansprucht. Weiterhin ist auch durch die kurzzeitige Erwärmung des zweiten Substrates eine Belastung des ersten Substrates nicht gegeben. In einer bevorzugten Ausführungsform ist das zweite Substrat ausgewählt aus der Gruppe bestehend aus Papier, Metall, Kunststoff oder Mehrschichtsubstraten. In einer anderen bevorzugten Ausführungsform ist der Verbundkörper eine flexible, mehrschichtige Folie.

Ein weiterer Gegenstand der vorliegenden Erfindung ist eine Vorrichtung zum Verkleben von einem ersten und einem zweiten Substrat, welche mindestens ein stützendes Förderband, um ein erstes folienförmiges Substrat, enthaltend mindestens einen Thermoplast, zu transportieren, eine Erwärmungsvorrichtung, um das mittels des mindestens einen Förderbandes transportierte Substrat an der Oberfläche zu erweichen, sowie eine Walzengruppe, um das erweichte erste Substrat mit dem zweiten Substrat zusammenführen und zu verkleben und ein weiteres stützendes Förderband, das in Prozessrichtung hinter der Walzengruppe angeordnet ist, umfasst.

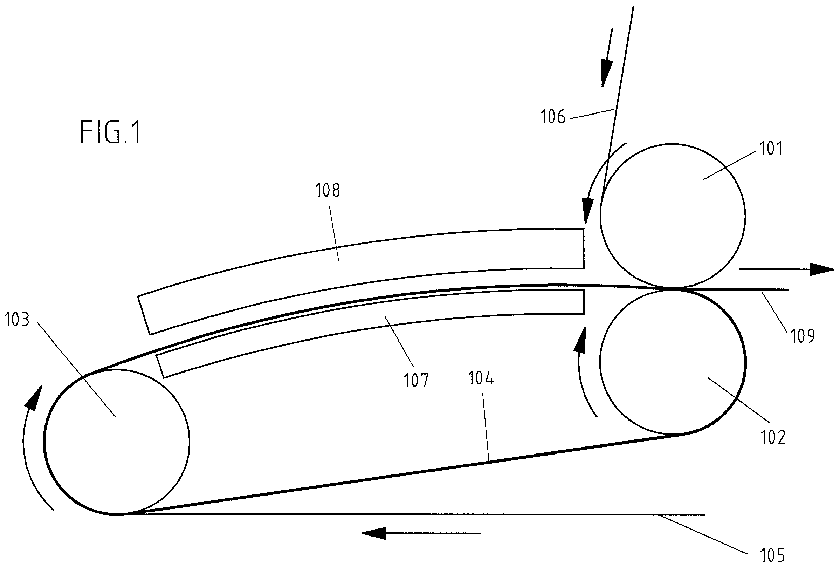

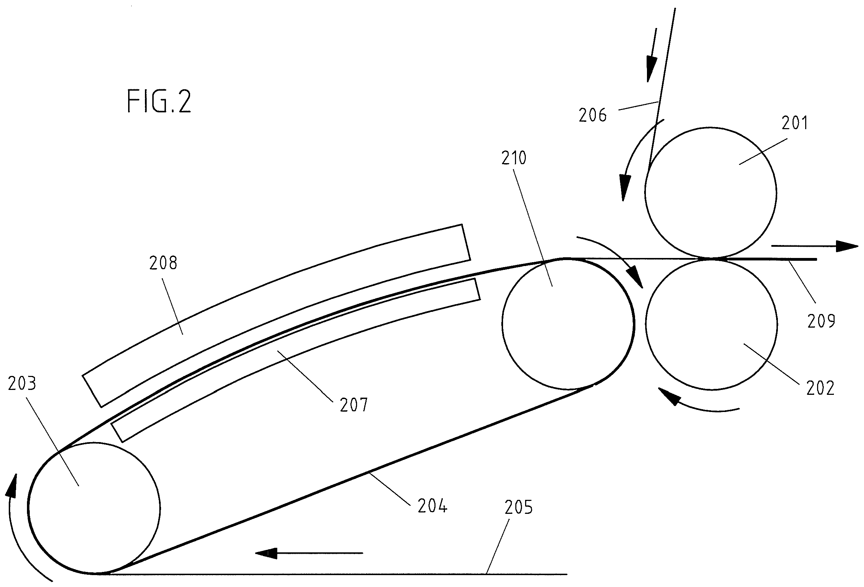

Das mindestens eine Förderband, wie hierin beschrieben, wird über mindestens zwei Walzen beziehungsweise Rollen geführt. Figur 1 zeigt eine Ausführungsform. Hierbei wird das mindestens eine stützende Förderband (104) über eine Walze (102) der Walzengruppe (101, 102) und eine weitere Walze (103) geführt. In einer Ausführungsform ist eine Walze, die vom mindestens einen stützenden Förderband (104) umlaufen wird, eine Walze des Walzenpaares (101, 102), die das erste (105) und das zweite (106) Substrat verklebt. In einer anderen Ausführungsform (nicht gemäß der vorliegenden Erfindung), die in Figur 2 gezeigt ist, umläuft das mindestens eine Förderband (204) mindestens zwei Walzen (203, 210), wobei die eine Walze (210), die von mindestens einem Förderband (204) umlaufen wird, unmittelbar vor dem Walzenpaar (201, 202), das in Schritt (iii) des Verfahrens die zwei Substrate (205, 206) miteinander verklebt, so angeordnet ist, dass das erste Substrat (205) nach dem Transport durch die Erwärmungszone in das Walzenpaar (201, 202) gelangen kann.

Das mindestens eine stützende Förderband (104; 204), auf das das erste Substrat (105, 205) auflegbar ist und welches zum Transport des ersten Substrats durch die Erwärmungszone dient, ist im Wirkungsbereich der Erwärmungsvorrichtung (108; 208) angebracht. Die Erwärmungsvorrichtung (108; 208) befindet sich in einer solchen Entfernung zum Förderband (104; 204), dass die Oberfläche des ersten Substrates (105; 205) erfindungsgemäß erwärmt werden kann.

In einer weiteren Ausführungsform ist auf der Seite des mindestens einen stützenden Förderbandes (104; 204), auf der das erste Substrat (105; 205) auflegbar ist, eine Kühleinheit (107; 207), so dass das Band (104; 204) von der Erwärmungsvorrichtung (108; 208) und der Kühleinheit (107; 207) umgeben ist. Die Kühleinheit (107; 207) ist in einer Ausführungsform plattenförmig. In einer weiteren Ausführungsform kann die Kühleinheit (107; 207) in unmittelbaren Kontakt mit dem mindestens einen stützenden Förderband stehen, so dass das mindestens eine Förderband (104; 204) an der Kühleinheit (107; 207) vorbeigeführt wird und dieses berührt. Dies ist vorteilhaft für den Wärmetransport von dem mindestens einen Förderband (104; 204) zur Kühleinheit (107; 207) auf die Rückseite des ersten Substrats (105; 205). Die Vorrichtung nach der Erfindung mindestens ein weiteres stützendes Förderband, das in Prozessrichtung hinter der Walzengruppe (101, 102; 201, 202) der erfindungsgemäßen Vorrichtung angeordnet ist und der hergestellte Verbundkörper (109; 209) stützt und transportiert. Dadurch wird die Verformung des Verbundkörpers (109; 209) unterdrückt. Eine Walzengruppe wie hierin verwendet umfasst zwei Walzen, wobei diese gegeneinander rotieren und auf die Werkstoffe, in diesem Fall auf die zwei Substrate, die sich dazwischen befinden, Druck ausüben und diese zusammen pressen.

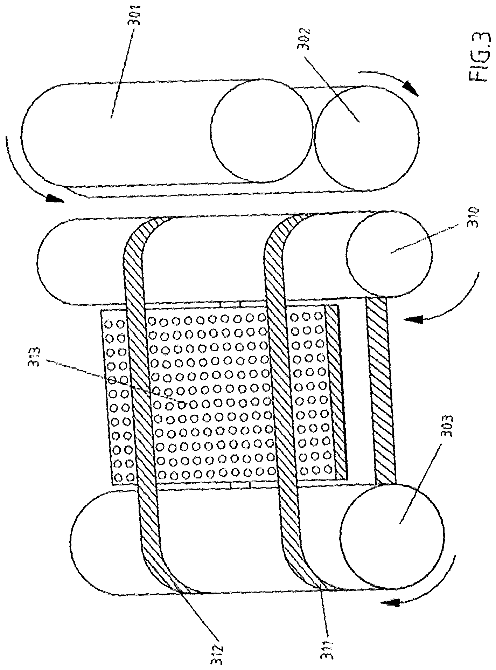

Die Vorrichtung gemäß der vorliegenden Erfindung, die in Figur 3 gezeigt ist, weist zwei Förderbänder (311, 312), auf denen das erste Substrat auflegbar ist, und über die Walzen (303, 310) geführt werden, auf. Die Walzen (303, 310) befinden sich in Prozessrichtung vor der Walzengruppe (301, 302). Ferner weist die Vorrichtung unterhalb der Förderbänder (311, 312) eine Ansaugvorrichtung (313) auf, die eine verbesserte Fixierung des ersten Substrats bewirkt und ein ungewolltes Deplatzieren, beispielsweise ein Verrutschen, während des Verfahrens entgegenwirkt. Ferner kann die Ansaugvorrichtung (313) ein Herunterrutschen des ersten Substrates von den Förderbändern (311, 312) verhindern, beispielsweise durch Einwirkung der Schwerkraft bei Schräglage der Förderbänder (311, 312).

## Patentansprüche

1. Verfahren zum Verkleben von zwei Substraten umfassend:
(i) Transportieren eines ersten, folienförmigen Substrats enthaltend mindestens einen Thermoplast mittels mindestens eines stützenden Förderbandes (104) durch eine Erwärmungszone, in der das Substrat so erwärmt wird, dass die Oberfläche des ersten Substrats (105) in einen erweichten Zustand überführt wird;
(ii) Zusammenführen des ersten Substrats (105) mit einem zweiten Substrat (106) wobei das zweite Substrat (106) mit einem Klebstoff mit einem Schichtgewicht von 0,01 bis 4 g/m², vorzugsweise 0,01 bis 1,5 g/m², bevorzugt 0,01 bis 1, g/m², besonders bevorzugt 0,01 bis 0,7 g/m² beschichtet ist, während und/oder unmittelbar, vorzugsweise unmittelbar, nach dem Erwärmen; und
(iii) Verkleben der beiden Substrate durch Druck.

2. Verfahren nach Anspruch 1, wobei das Verfahren einen zusätzlichen Schritt umfasst, in dem das zweite Substrat (106) mit einem Klebstoff mit einem Schichtgewicht von 0,01 bis 4 g/m², vorzugsweise 0,01 bis 1,5 g/m², bevorzugt 0,01 bis 1 g/m², besonders bevorzugt 0,01 bis 0,7 g/m² beschichtet wird, vorzugsweise während des Schritts (i).

3. Verfahren nach Anspruch 1 oder 2, wobei während und/oder nach Schritt (iii) die miteinander verklebten Substrate über mindestens ein stützendes Förderband (104) geführt werden.

4. Verfahren nach einem der Ansprüche 1 bis 3, wobei das mindestens eine stützende Förderband (104) eine Temperaturbeständigkeit von mehr als 200 °C aufweist.

5. Verfahren nach einem der Ansprüche 1 bis 4, wobei während auf der Oberseite des mindestens einen Förderbandes (104) das erste Substrat (105) gestützt und erwärmt wird, die Unterseite des mindestens einen Förderbandes (104) gekühlt wird, vorzugsweise durch eine Kühleinheit (107)

6. Verfahren nach einem der Ansprüche 1 bis 5, wobei das mindestens eine stützende Förderband (104) die 1,0- bis 1,1-fache, vorzugsweise die 1,01- bis 1,10-fache, Geschwindigkeit des zweiten Substrates (106) aufweist.

7. Verfahren nach einem der Ansprüche 1 bis 6, wobei
(i) das erste Substrat (105) eine Kunststofffolie mit einer Erweichungstemperatur unter 200 °C, vorzugsweise unter 170 °C, ist; und/oder
(ii) das erste Substrat (105) Polyethylen, Polypropylen oder ein Gemisch davon ist.

8. Verfahren nach einem der Ansprüche 1 bis 7, wobei der Klebstoff ausgewählt ist aus der Gruppe bestehend aus thermoplastischen Klebstoffen, vernetzbaren Klebstoffen und Gemischen davon in lösemittelhaltiger, wässriger oder lösemittelfreier Form.

9. Verfahren nach einem der Ansprüche 1 bis 8, wobei das Erwärmen des ersten Substrats (105) mit Plasma-, Laserbehandlung, Beflammung, Ultraschall, IR-Strahlung, vorzugsweise mit IR-Strahlung mit einer Wellenlänge von 1 bis 10 µm, bevorzugt 1,5 bis 2 µm, durchgeführt wird.

10. Verfahren nach einem der Ansprüche 1 bis 9, wobei das Erwärmen auf eine Temperatur im Bereich von +40 °C bis -40 °C, vorzugsweise von +20 °C bis -20 °C, von der Erweichungstemperatur des ersten Substrats (105) durchgeführt wird.

11. Verfahren nach einem der Ansprüche 1 bis 10, wobei sich die Oberfläche des zweiten Substrats (106) bei der Erwärmungstemperatur nicht in einem erweichten Zustand befindet.

12. Verfahren nach einem der Ansprüche 1 bis 11, wobei das erste Substrat (105) und das zweite Substrat (106) folienförmig sind.

13. Vorrichtung zum Verkleben von einem ersten folienförmigen Substrat (105), enthaltend mindestens einen Thermoplast, und einem zweiten Substrat (106) umfassend
(i) mindestens ein stützendes Förderband (104) um ein erstes folienförmiges Substrat (105) enthaltend mindestens einen Thermoplast, zu transportieren,
(ii) eine Erwärmungseinrichtung (108) um das mittels des mindestens einen Förderbandes (104) transportiere Substrat an der Oberfläche zu erweichen, und
(iii) eine Walzengruppe (101; 102) um das erweichte erste Substrat mit dem zweiten Substrat (106) zusammenführen und zu verkleben; **dadurch gekennzeichnet, dass** (iv) die Vorrichtung zum Verkleben ein weiteres stützendes Förderband umfasst, das in Prozessrichtung hinter der Walzengruppe (101; 102) angeordnet ist.

14. Vorrichtung nach Anspruch 13, wobei das stützende Förderband (104) eine Walze der Walzengruppe (101; 102) umläuft.

15. Vorrichtung nach Anspruch 13 oder 14, wobei
(i) auf der anderen Seite des mindestens einen stützenden Förderbandes (104) eine Kühleinheit (107) ist, so dass die nicht zu verklebende Seite des ersten Substrats (105) gekühlt wird; und/oder
(ii) die Kühleinheit (107) plattenförmig ist; und/oder
(iii) die Kühleinheit (107) in unmittelbaren Kontakt mit dem mindestens einen stützenden Förderband steht (104).

## Claims

1. A method for bonding two substrates, comprising:
(i) transporting a first, film-like substrate containing at least one thermoplastic by means of at least one supporting conveyor belt (104) through a heating zone in which the substrate is heated such that the surface of the first substrate (105) is converted to a softened state;
(ii) merging the first substrate (105) with a second substrate (106), wherein the second substrate (106) is coated with an adhesive that has a coating weight of 0.01 to 4 g/m², preferably 0.01 to 1.5 g/m², more preferably 0.01 to 1 g/m², particularly preferably 0.01 to 0.7 g/m², during and/or immediately, preferably immediately, after heating; and
(iii) bonding the two substrates by means of pressure.

2. The method according to claim 1, wherein the method comprises an additional step in which the second substrate (106) is coated with an adhesive that has a coating weight of 0.01 to 4 g/m², preferably 0.01 to 1.5 g/m², more preferably 0.01 to 1 g/m², particularly preferably 0.01 to 0.7 g/m², preferably during step (i).

3. The method according to claim 1 or 2, wherein during and/or after step (iii) the substrates bonded together are guided over at least one supporting conveyor belt (104).

4. The method according to one of claims 1 to 3, wherein the at least one supporting conveyor belt (104) has a temperature resistance of more than 200 °C.

5. The method according to one of claims 1 to 4, wherein, while the first substrate (105) is supported and heated on the top side of the at least one conveyor belt (104), the bottom side of the at least one conveyor belt (104) is cooled, preferably by means of a cooling unit (107).

6. The method according to one of claims 1 to 5, wherein the at least one supporting conveyor belt (104) has 1.0 to 1.1 times, preferably 1.01 to 1.10 times, the speed of the second substrate (106).

7. The method according to one of claims 1 to 6, wherein
(i) the first substrate (105) is a plastics film having a softening temperature below 200 °C, preferably below 170 °C; and/or
(ii) the first substrate (105) is polyethylene, polypropylene or a mixture thereof.

8. The method according to one of claims 1 to 7, wherein the adhesive is selected from the group consisting of thermoplastic adhesives, crosslinkable adhesives and mixtures thereof in solvent-containing, aqueous or solvent-free form.

9. The method according to one of claims 1 to 8, wherein the heating of the first substrate (105) is carried out using plasma treatment, laser treatment, flame treatment, ultrasound, IR radiation, preferably using IR radiation having a wavelength of 1 to 10 µm, preferably 1.5 to 2 µm.

10. The method according to one of claims 1 to 9, wherein the heating is carried out to a temperature in the range of from +40 °C to -40 °C, preferably from +20 °C to -20 °C, from the softening temperature of the first substrate (105).

11. The method according to one of claims 1 to 10, wherein the surface of the second substrate (106) at the heating temperature is not in a softened state.

12. The method according to one of claims 1 to 11, wherein the first substrate (105) and the second substrate (106) are film-like.

13. A device for bonding a first film-like substrate (105), containing at least one thermoplastic, and a second substrate (106), comprising
(i) at least one supporting conveyor belt (104) for transporting a first film-like substrate (105) containing at least one thermoplastic,
(ii) a heating apparatus (108) for softening the substrate transported by means of the at least one conveyor belt (104) on the surface, and
(iii) a roller group (101; 102) for merging and bonding the softened first substrate and the second substrate (106);
**characterized in that**
(iv) the device for bonding comprises a further supporting conveyor belt, which is arranged behind the roller group (101; 102) in the process direction.

14. The device according to claim 13, wherein the supporting conveyor belt (104) circulates a roller of the roller group (101; 102).

15. The device according to claim 13 or 14, wherein
(i) a cooling unit (107) is on the other side of the at least one supporting conveyor belt (104) such that the side of the first substrate (105) that is not intended to be bonded is cooled; and/or
(ii) the cooling unit (107) is planar; and/or
(iii) the cooling unit (107) is in direct contact with the at least one supporting conveyor belt (104).

## Revendications

1. Procédé de collage de deux substrats consistant à :
(i) transporter un premier substrat sous forme de film contenant au moins un thermoplaste au moyen d'au moins une courroie d'appui (104) à travers une zone de chauffage dans laquelle le substrat sera chauffé de sorte que la surface du premier substrat (105) est transformée dans un état amolli ;
(ii) réunir le premier substrat (105) avec un second substrat (106), le second substrat (106) étant recouvert d'un adhésif ayant un poids de couche de 0,01 à 4 g/m², de préférence de 0,01 à 1,5 g/m², de manière préférée de 0,01 à 1,0 g/m², de manière particulièrement préférée de 0,01 à 0,7 g/m², pendant et/ou immédiatement après, de préférence immédiatement après le chauffage ; et
(iii) coller les deux substrats par pression.

2. Procédé selon la revendication 1, le procédé comprenant une étape supplémentaire, dans laquelle le second substrat (106) est recouvert avec un adhésif ayant un poids de couche de 0,01 à 4 g/m², de préférence de 0,01 à 1,5 g/m², de manière préférée de 0,01 à 1 g/m², de manière particulièrement préférée de 0,01 à 0,7 g/m², de préférence au cours de l'étape (i).

3. Procédé selon la revendication 1 ou 2, dans lequel, au cours de et/ou après l'étape (iii), les substrats collés les uns aux autres sont guidés par au moins une courroie d'appui (104).

4. Procédé selon l'une des revendications 1 à 3, dans lequel l'au moins une courroie d'appui (104) présente une résistance à la température de plus de 200 °C.

5. Procédé selon l'une des revendications 1 à 4, dans lequel, pendant que le premier substrat (105) est posé et est chauffé sur le côté supérieur de l'au moins une courroie (104), le côté inférieur de l'au moins une courroie (104) est refroidi, de préférence par une unité de réfrigération (107).

6. Procédé selon l'une des revendications 1 à 5, dans lequel l'au moins une courroie d'appui (104) présente une vitesse valant de 1,0 à 1,1 fois, de préférence de 1,01 à 1,10 fois celle du second substrat (106).

7. Procédé selon l'une des revendications 1 à 6, dans lequel
(i) le premier substrat (105) est un film plastique ayant une température de ramollissement inférieure à 200 °C, de préférence inférieure à 170 °C ; et/ou
(ii) le premier substrat (105) est du polyéthylène, du polypropylène ou un mélange de ceux-ci.

8. Procédé selon l'une des revendications 1 à 7, dans lequel l'adhésif est choisi dans le groupe constitué des adhésifs thermoplastiques, des adhésifs pouvant être réticulés et des mélanges de ceux-ci sous des formes contenant des solvants, aqueuses ou exemptes de solvants.

9. Procédé selon l'une des revendications 1 à 8, dans lequel le chauffage du premier substrat (105) est effectué par traitement au plasma, par traitement au laser, par traitement à la flamme, par ultrasons, par radiation infrarouge, de préférence par radiation infrarouge avec une longueur d'ondes allant de 1 à 10 µm, de manière préférée de 1,5 à 2 µm.

10. Procédé selon l'une des revendications 1 à 9, dans lequel le chauffage est effectué à une température comprise dans une fourchette de + 40 °C à - 40 °C, de préférence de + 20 °C à - 20 °C de la température de ramollissement du premier substrat (105).

11. Procédé selon l'une des revendications 1 à 10, dans lequel la surface du second substrat (106) ne se trouve pas dans un état amolli à la température de chauffage.

12. Procédé selon l'une des revendications 1 à 11, dans lequel le premier substrat (105) et le second substrat (106) sont en forme de film.

13. Dispositif de collage d'un premier substrat (105) en forme de film, contenant au moins un thermoplaste, et un second substrat (106) comprenant
(i) au moins une courroie d'appui (104) pour transporter un premier substrat (105) en forme de film contenant au moins un thermoplaste,
(ii) un dispositif de chauffage (108) pour amollir le substrat, transporté au moyen d'au moins une courroie (104), en surface, et
(iii) un groupe de rouleaux (101 ; 102) pour réunir et coller le premier substrat amolli au second substrat (106) ; **caractérisé en ce que**
(iv) le dispositif de collage comprend une autre courroie d'appui, qui est disposée derrière le groupe de rouleaux (101 ; 102) dans la direction du processus.

14. Dispositif selon la revendication 13, dans lequel la courroie d'appui (104) entoure un rouleau du groupe de rouleaux (101 ; 102).

15. Dispositif selon la revendication 13 ou 14, dans lequel
(i) une unité de réfrigération (107) se trouve sur l'autre côté de l'au moins une courroie d'appui (104),
de sorte que le côté ne devant pas être collé du premier substrat (105) est refroidi ; et/ou
(ii) l'unité de réfrigération (107) est en forme de plaque ; et/ou
(iii) l'unité de réfrigération (107) est en contact immédiat avec l'au moins une courroie d'appui (104).
